# EUROPEAN PATENT APPLICATION

(11) **EP 4 848 497 A1**
(43) Date of publication of application: **02.12.2026**
(21) Application number: 25867336.7
(22) Date of filing: 06.08.2025
(51) Int. Cl.: H01R 43/28

(54) **HIGH-QUALITY WIRE SEPARATION SHAPING APPARATUS FOR TWIN-CORE CABLE**

(30) Priority: 20.03.2025 CN 202510333368
(71) Applicant: Jiangsu Bozhiwang Automation Equipment Co., Ltd., Changzhou, Jiangsu 213125 (CN)
(72) Inventor: SI, Xiangliang, Changzhou Jiangsu 213125 (CN); BAI, Gang, Changzhou Jiangsu 213125 (CN); ZHU, Qi, Changzhou Jiangsu 213125 (CN)
(74) Representative: Chung, Hoi Kan
(86) International application number: PCT/CN2025/113000
(87) International publication number: WO 2026/194141

(57) **Abstract**

The invention relates to the technical field of cable processing and, in particular, to a high-quality separating and shaping device for two-core cables. The device includes a base on which two separating mechanisms are symmetrically arranged. Each separating mechanism includes: a lower sliding base sliding horizontally; an upper sliding base sliding vertically; a power block sliding horizontally and provided with a V-shaped sliding groove in which a sliding rod extends; and a limiting block arranged on a movement trajectory of the lower sliding base. In an initial position, each sliding rod rests at an end of the corresponding sliding groove that is close to the corresponding limiting block, and the lower sliding bases and the base are fixed to each other by first locking mechanisms. In a clamping position, lowest points in the middle of the sliding grooves are aligned with the sliding rods, the first locking mechanisms are unlocked, and the lower sliding bases and the power blocks are fixed to each other by second locking mechanisms. In a separating position, the power blocks drive the lower sliding bases to move to abut against the limiting blocks, and the second locking mechanisms are unlocked. In a releasing position, the power blocks move until each sliding rod rests at an end of the corresponding sliding groove that is away from the corresponding limiting block. The device of the invention can effectively improve the cable separating quality.

## Description

### TECHNICAL FIELD

The present invention relates to the technical field of cable processing and, in particular, to a high-quality separating and shaping device for two-core cables.

### BACKGROUND

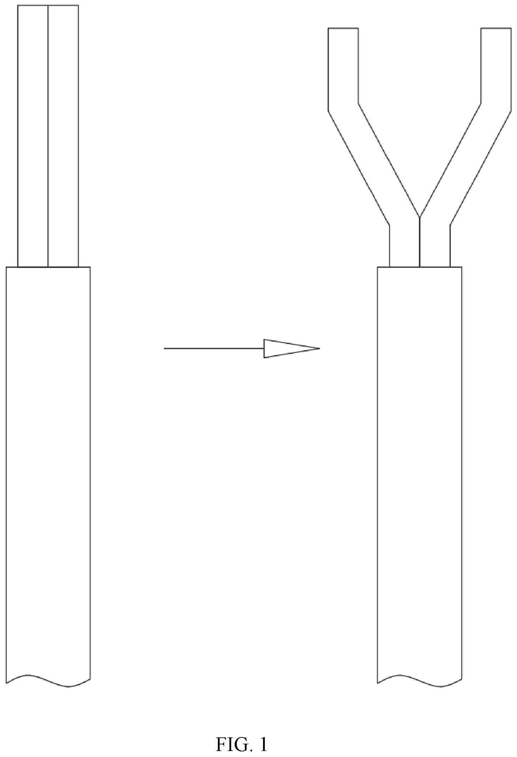

During the use of cables, there may be a need to strip the outer sheaths of the cables and then connect each core into a corresponding wiring slot. A separating and shaping device is a device used for separating cores in a cable as shown in FIG. 1. After separating and shaping, the cores can be conveniently placed into the corresponding wiring slots for subsequent connection.

In the related prior art, to reduce the size of the device, usually only one driving unit is provided to drive the device to perform separation operations. Therefore, for a known device, holes are formed in two sliders. After each core is placed into the corresponding hole, the sliders are driven to move to separate the two cores. However, with this structure, due to the lack of fixation for the cores, the cores are prone to falling off or moving during separation. Moreover, after separation is completed, the cores are prone to getting stuck in the holes due to deformation. Forcible removal of the cores will cause scratches on the cores, ultimately resulting in poor quality of cable core separation and other problems.

### SUMMARY

The present invention provides a high-quality separating and shaping device for two-core cables, which can effectively solve the problem of poor cable separating quality of the known device in the Background section.

A high-quality separating and shaping device for two-core cables provided by the present invention includes:
a base fixedly arranged independently; two separating mechanisms being symmetrically arranged on the base;
each separating mechanism includes:
   a lower sliding base sliding horizontally on the base and provided with a lower clamping jaw;
   an upper sliding base sliding vertically on the lower sliding base and provided with an upper clamping jaw and a sliding rod;
   a power block driven by a power unit to slide horizontally and provided with a vertically V-shaped sliding groove, the sliding rod extending into the sliding groove; and
   a limiting block arranged on a movement trajectory of the lower sliding base;
   wherein in an initial position, the lower sliding bases of the two separating mechanisms abut against each other, each sliding rod rests at an end of the corresponding sliding groove that is close to the corresponding limiting block, and the lower sliding bases and the base are fixed to each other by first locking mechanisms;
   in a clamping position, the power blocks move until lowest points in the middle of the sliding grooves are aligned with the sliding rods, the first locking mechanisms are unlocked, and the lower sliding bases and the power blocks are fixed to each other by second locking mechanisms;
   in a separating position, the power blocks drive the lower sliding bases to move to abut against the limiting blocks, and the second locking mechanisms are unlocked;
   in a releasing position, the power blocks move until each sliding rod rests at an end of the corresponding sliding groove that is away from the corresponding limiting block.

Further, each lower clamping jaw is provided with a first extension plate extending upward, each upper clamping jaw is provided with a second extension plate extending downward, and a side surface of each first extension plate abuts against a side surface of the corresponding second extension plate.

Further, a plurality of first extension plates and a plurality of second extension plates are provided, and the first extension plates and the second extension plates are arranged alternately.

Further, each first locking mechanism includes a lock block and a first spring;
the lock blocks slide vertically on the base; a first inclined surface is provided on a side of the top of each lock block that is away from the corresponding limiting block;
a first spring is arranged between each lock block and the base;
a lock hole is provided at the bottom of each lower sliding base.

Further, a vertical positioning groove is provided on a side surface of each lock block; positioning blocks are arranged on the base, and a side surface of each positioning block extends into the corresponding positioning groove.

Further, the base is provided with adjusting nuts screwed into the base, and one ends of the first springs abut against the adjusting nuts.

Further, each second locking mechanism includes a rotating block and an elastic sheet;
one end of each rotating block is rotatably mounted on the corresponding lower sliding base, and the other end thereof is provided with an abutment block; one end of each abutment block that is away from the corresponding limiting block has a vertical planar structure, and the other end thereof is provided with a second inclined surface;
one end of each elastic sheet is fixed to the corresponding rotating block, and the other end thereof is fixed to the corresponding lower sliding base.

Further, a push block is provided on each limiting block, and a side of each push block that faces the corresponding lower sliding base has a curved structure.

Further, a second spring is arranged between each upper sliding base and the corresponding lower sliding base.

Further, two sliding rails are provided on the base and are located at two sides of each lower sliding base; sliding blocks sliding in the sliding rails are provided on two sides of each lower sliding base.

The technical solutions of the present invention can achieve the following technical effects:
Through the cooperation of the above components, the device can realize all the actions of clamping, separating and releasing the wire cores with only one power unit. This ensures the fixing effect of the wire cores during separation and prevents the wire cores from being restricted or interfered when the wire cores are taken out, thereby effectively guaranteeing the separation quality of the cable cores. Moreover, with a purely mechanical structure, the device can effectively ensure the sequence of all actions and avoid the possibility that the wire cores are moved before being clamped, thereby further ensuring smooth separation of the wire cores. In addition, the purely mechanical structure can effectively reduce the size of the device and meet the requirement of using the device in a narrow space.

### BRIEF DESCRIPTION OF THE DRAWINGS

In order to more clearly illustrate the technical solutions in the embodiments of the invention or the prior art, the following is a brief introduction to the drawings required for the description of the embodiments or the prior art. Obviously, the drawings described below are merely some embodiments of the invention. For those of ordinary skill in the art, other drawings may be obtained on the basis of these drawings without creative labor.
FIG.1 is a view showing a process of separating and shaping a two-core cable in the Background section of the present invention.
FIG.2 is an overall structure view of a high-quality separating and shaping device for two-core cables according to the present invention.
FIG.3 is a schematic structural view of the high-quality separating and shaping device for two-core cables according to the present invention.
FIG.4 is a side view of the high-quality separating and shaping device for two-core cables according to the present invention.
FIG.5 is a sectional view taken along position A in FIG.4 in an initial position according to the present invention.
FIG.6 is a sectional view taken along position B of FIG.4 in the initial position according to the present invention.
FIG.7 is a sectional view taken along position A of FIG.4 in a clamping position according to the present invention.
FIG.8 is a sectional view taken along position B of FIG.4 in the clamping position according to the present invention.
FIG.9 is a sectional view taken along position A of FIG.4 in a separating position according to the present invention.
FIG.10 is a sectional view taken along position B of FIG.4 in the separating position according to the present invention.
FIG.11 is a sectional view taken along position A of FIG.4 in a releasing position according to the present invention.
FIG.12 is a sectional view taken along position B of FIG.4 in the releasing position according to the present invention.
FIG.13 is a schematic structural view of a lower clamping jaw and an upper clamping jaw according to the present invention.
FIG.14 is a schematic structural view of a first locking mechanism according to the present invention.

Reference numerals: 1. base; 11. adjusting nut; 12. sliding rail; 2. lower sliding base; 21. lower clamping jaw; 21a. first extension plate; 22. sliding block; 3. upper sliding base; 31. upper clamping jaw; 31a. second extension plate; 32. sliding rod; 4. power block; 41. sliding groove; 5. limiting block; 51. push block; 61. lock block; 61a. first inclined surface; 61b. positioning groove; 62. first spring; 63. positioning block; 71. rotating block; 72. elastic sheet; 71a. abutment block; 8. second spring.

### DETAILED DESCRIPTION OF THE EMBODIMENTS

The technical solutions of the embodiments of the present invention are clearly and completely described below with reference to the accompanying drawings in the embodiments of the present invention. Apparently, the described embodiments are only some, but not all of the embodiments of the present invention.

In the description of the present disclosure, it should be noted that the orientation or position relationships indicated by the terms such as "center", "up", "down", "left", "right", "vertical", "horizontal", "inside", and "outside" are based on the orientation or position relationships shown in the accompanying drawings. These terms are only for the convenience of describing the present disclosure and simplifying the description, rather than indicating or implying that the device or element referred to must have a specific orientation, be constructed and operated in a specific orientation. Therefore, they should not be construed as limiting the present invention.

In the description of the invention, it should be noted that, unless otherwise expressly specified and limited, the terms "mount", "connected to " and "connect" shall be understood broadly. For example, they may refer to fixed connection, detachable connection, or integrated connection; they may refer to mechanical connection or electrical connection; they may refer to direct connection, or indirect connection by an intermediate medium, or connection within two components. For those of ordinary skill in the art, the specific meanings of the above terms used in the present invention may be understood according to specific circumstances.

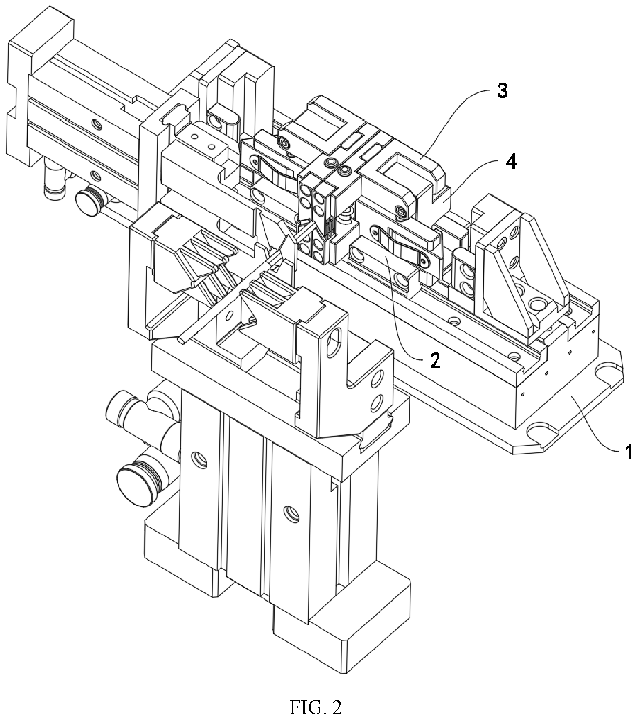

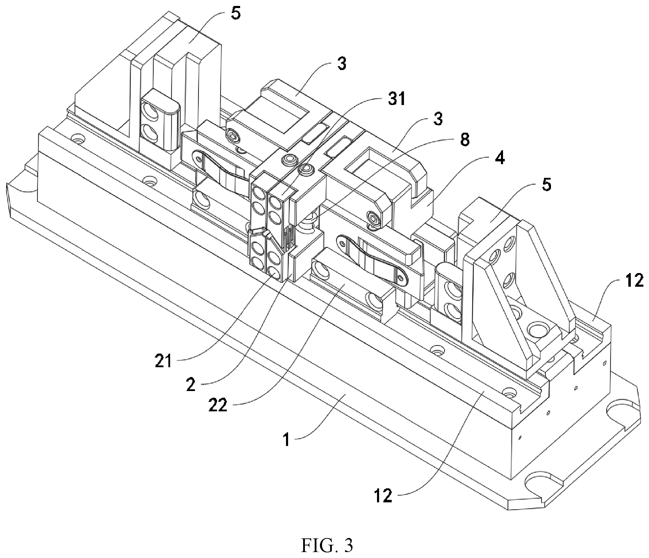

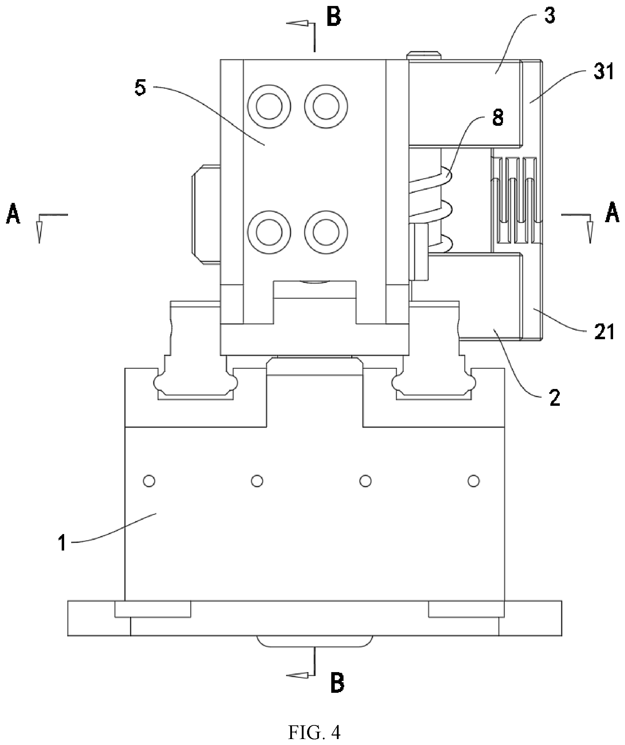

The present invention relates to a high-quality separating and shaping device for two-core cables. As shown in FIGS. 2-4, the device includes:
a base 1 mounted on the ground or a frame of other device so that the base 1 is fixedly arranged independently relative to other components in the device. All other components are supported by the base 1. Two separating mechanisms are symmetrically arranged on the base 1, each for separating and shaping one core of a cable.

Each separating mechanism includes:
a lower sliding base 2, sliding on the base 1 in a horizontal linear direction perpendicular to a length direction of the cable, a lower clamping jaw 21 being fixedly arranged on the lower sliding base 2;
an upper sliding base 3, sliding vertically on the lower sliding base 2, an upper clamping jaw 31 and a sliding rod 32 being fixedly arranged on the upper sliding base 3;
a power block 4, where a main body of the power block 4 is mostly arranged inside the lower sliding base 2, one side of the power block 4 partially extends outside the lower sliding base 2 and is connected to a power unit so that the power block 4 can be driven by the power unit to slide horizontally in the same direction as the lower sliding base 2; the power block 4 is provided with a sliding groove 41 which is high at two ends and low in the middle, and is generally V-shaped vertically; the sliding rod 32 extends into the sliding groove 41;
a limiting block 5, fixedly mounted on the base 1 and arranged on a movement trajectory of the lower sliding base 2, where there is a distance between the limiting block 5 and the lower sliding base 2 In an initial position, and this distance is an offset distance required for each core, and can be adjusted accordingly according to processing requirements;
a first locking mechanism, configured to keep mutual fixation between the lower sliding base 2 and the base 1 at a specific moment; and
a second locking mechanism, configured to keep mutual fixation between the lower sliding base 2 and the power block 4 at a specific moment.

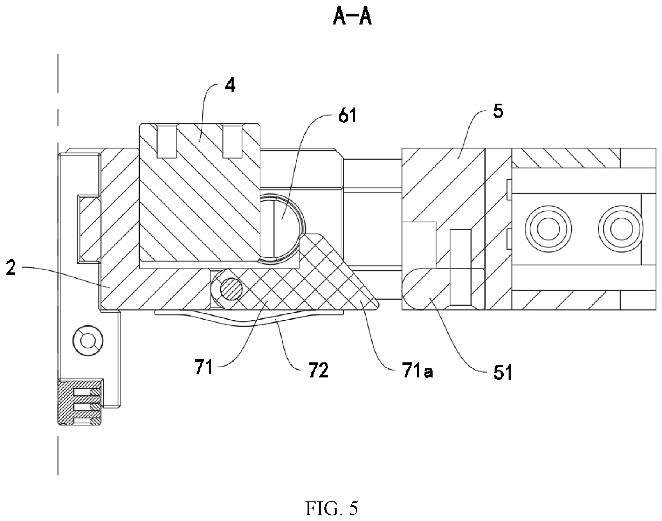

The specific working process and principle of the device are as follows:
In an initial position, as shown in FIGS. 5-6, the lower sliding bases 2 of the two separating mechanisms abut against each other. In this case, the power blocks 4 are located at the position farthest from the corresponding limiting blocks 5, and each sliding rod 32 rests at an end of the corresponding sliding groove 41 (i.e., the high position of the corresponding sliding groove 41) that is close to the corresponding limiting block 5. Accordingly, the upper sliding bases 3 rest at the high positions along with the sliding rods 32, so that the lower clamping jaws 21 and the upper clamping jaws 31 are separated from each other. In this case, the lower sliding bases 2 and the base 1 are fixed to each other by first locking mechanisms. After wire cores are placed between the lower clamping jaws 21 and the upper clamping jaws 31, the power unit is activated to drive the power blocks 4 to move. Since the first locking mechanisms remain in a locked state, the lower sliding bases 2 cannot move, and the power blocks 4 move alone.

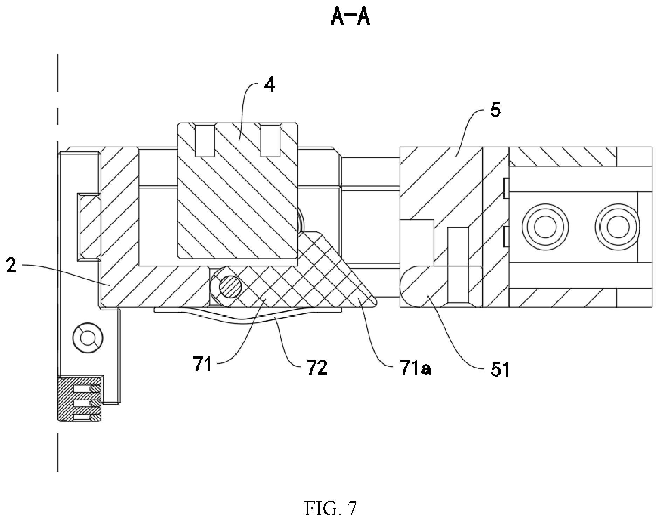

When the power blocks 4 move to clamping positions, as shown in FIGS. 7-8, the power blocks 4 move until the lowest points in the middle of the sliding grooves 41 are aligned with the corresponding sliding rods 32, so that the sliding rods 32 move downward. The sliding rods 32 then drive the upper sliding bases 3 to move downward as a whole, such that the upper clamping jaws 31 move downward to cooperate with the lower clamping jaws 21 to clamp the wire cores. When moving to the clamping positions, the power blocks 4 also unlock the first locking mechanisms and in this case, the lower sliding bases 2 and the power blocks 4 are fixed to each other by second locking mechanisms. Thereafter, as the power blocks 4 move, the lower sliding bases 2 move together with the power blocks 4, such that the upper clamping jaws 31 and the lower clamping jaws 21 carry the wire cores to move horizontally for a certain distance while clamping the wire cores, thereby completing separation of the wire cores.

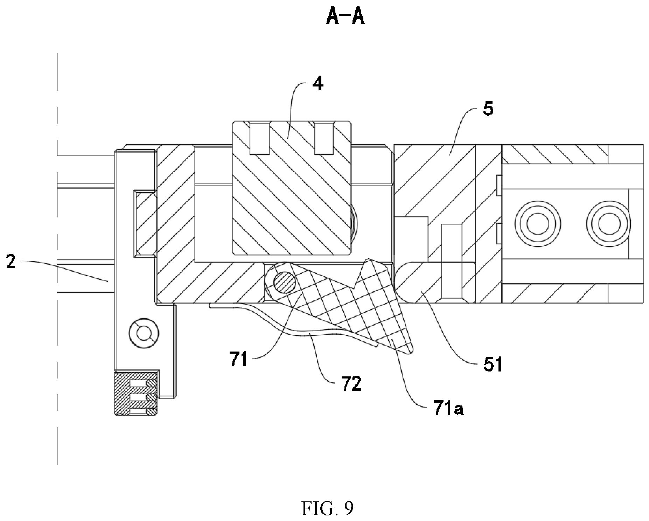

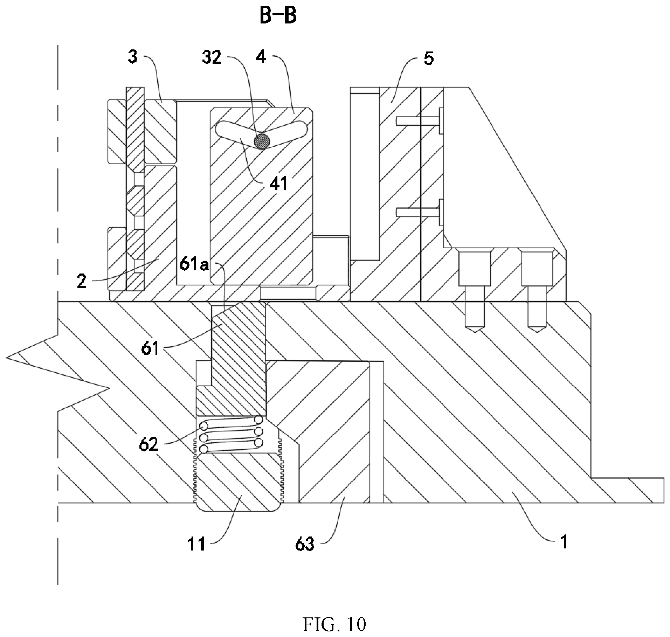

Driven by the power blocks 4, the lower sliding bases 2 move until the lower sliding bases 2 finally abut against the corresponding limiting blocks 5, thus reaching a separating position, as shown in FIGS. 9-10. In this case, the separation and shaping of the wire cores are completed. The limiting blocks 5 unlock the second locking mechanisms, so that the power blocks 4 can again move alone relative to the lower sliding bases 2 until the power blocks 4 move to releasing positions.

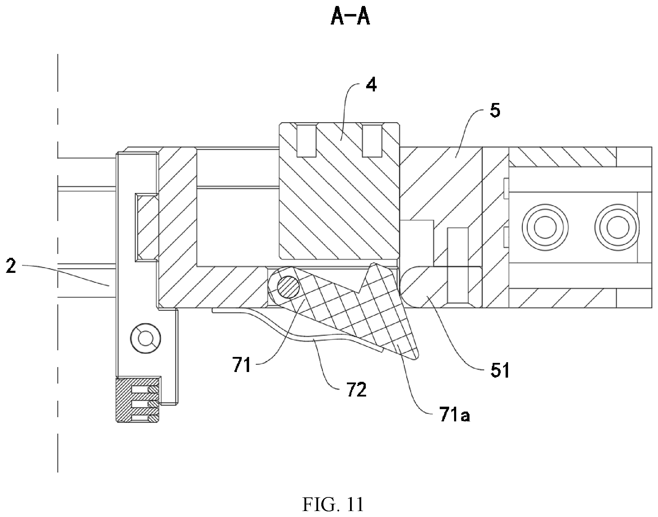

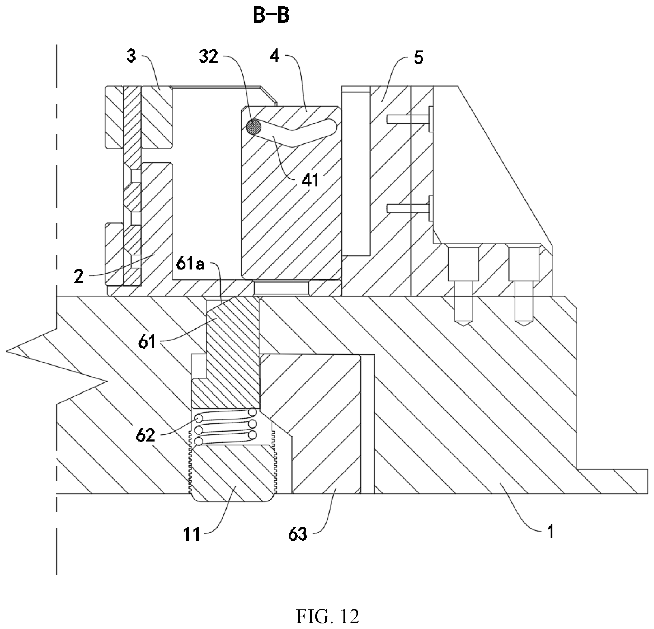

At the the releasing positions, as shown in FIGS. 11-12, the power blocks 4 move until each sliding rod 32 rests at an end of the corresponding sliding groove 41 that is away from the corresponding limiting block 5 (i.e., each sliding rod 32 returning to the corresponding high position again). As a result, the upper sliding bases 3 are driven to move upward as a whole, the upper clamping jaws 31 are separated from the lower clamping jaws 21 to release the wire cores from being clamped, and then the wire cores can be taken out conveniently.

After the cable is removed, the power blocks 4 moves reversely, returning the entire device to the initial position for the next round of processing operation.

It can be seen that, through the cooperation of the above components, the device can realize all the actions of clamping, separating and releasing the wire cores with only one power unit. This ensures the fixing effect of the wire cores during separation and prevents the wire cores from being restricted or interfered when the wire cores are taken out, thereby effectively guaranteeing the separation quality of the cable cores. Moreover, with a purely mechanical structure, the device can effectively ensure the sequence of all actions and avoid the possibility that the wire cores are moved before being clamped, thereby further ensuring smooth separation of the wire cores. In addition, the purely mechanical structure can effectively reduce the size of the device and meet the requirement of using the device in a narrow space.

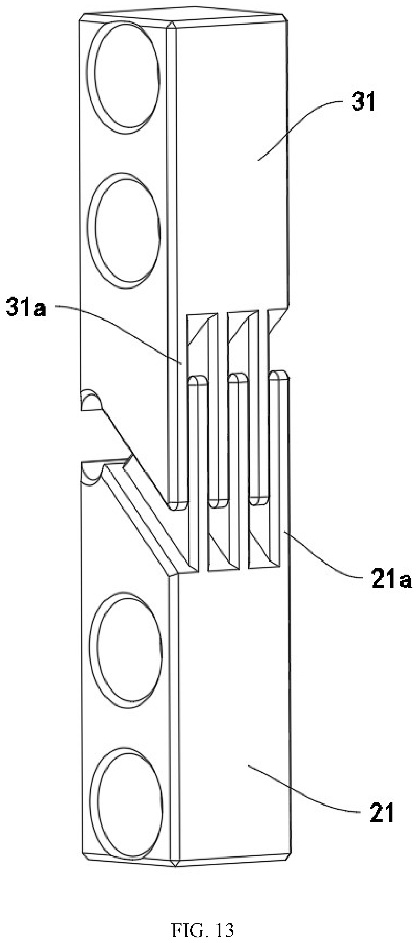

To ensure the reliability of fixing the wire cores, as shown in FIG. 13, the device is preferably provided with a first extension plate 21a extending upward on each lower clamping jaw 21 and a second extension plate 31a extending downward on each upper clamping jaw 31. A side surface of each first extension plate 21a always abuts against a side surface of the corresponding second extension plate 31a. In this way, even when the upper clamping jaws 31 and the lower clamping jaws 21 are separated from each other, grooves can be formed by the first extension plates 21a and the second extension plates 31a, thereby preventing vertical dislocation of the upper clamping jaws 31 relative to the lower clamping jaws 21 that would result in failure to clamp the wire cores.

Preferably, each upper clamping jaw 31 and the corresponding lower clamping jaw 21 are respectively provided with a semi-arc upper fixing groove and a semi-arc lower fixing groove. After the upper clamping jaws 31 move downward, the upper and lower fixing grooves can be combined into complete circles to clamp the wire cores, so as to ensure the fixation of the wire cores. The first extension plates 21a and the second extension plates 31a may be respectively arranged at one sides of the lower fixing grooves and the upper fixing grooves, so that the two lower fixing grooves in the two separating mechanisms are both located between the two first extension plates 21a, and the two upper fixing grooves in the two separating mechanisms are both located between the two second extension plates 31a. In addition, side surfaces of the first extension plates 21a and the second extension plates 31a facing the upper and lower fixing grooves are preferably formed as inclined surfaces. In this way, even if the wire cores are not aligned with the upper and lower fixing grooves, the inclined surfaces can push the wire cores into the upper and lower fixing grooves during the downward movement of the upper clamping jaws 31, thereby ensuring the clamping and fixation of the wire cores.

Preferably, a plurality of first extension plates 21a and a plurality of second extension plates 31a are provided, and the first extension plates 21a and the second extension plates 31a are arranged alternately, so as to further form a horizontal constraint on the upper clamping jaws 31 and the lower clamping jaws 21. This ensures that the upper clamping jaws 31 and the lower clamping jaws 21 can be vertically aligned to accurately clamp the wire cores.

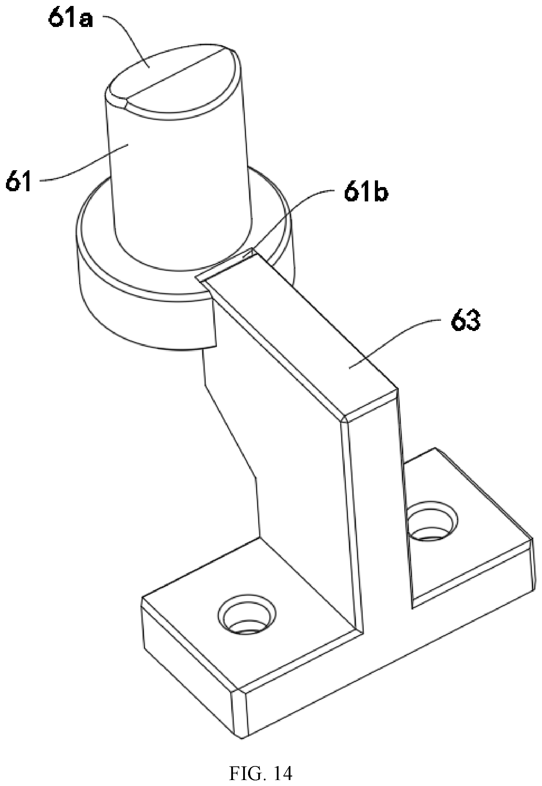

Each first locking mechanism may be realized by using a structure such as a connecting rod. The device of the present invention provides a simpler and more reliable structure, as shown in FIG. 14, which includes a lock block 61 and a first spring 62.

The base 1 is provided with vertical through holes, and the lock blocks 61 are disposed in the through holes so that the lock blocks 61 can slide vertically on the base 1. A first inclined surface 61a is provided on a side of the top of each lock block 61 that is away from the corresponding limiting block 5, and the first inclined surface 61a is higher on a side close to the limiting block 5 than on a side away from the limiting block 5. The first spring 62 is arranged between each lock block 61 and the base 1. A lock hole is provided at the bottom of each lower sliding base 2.

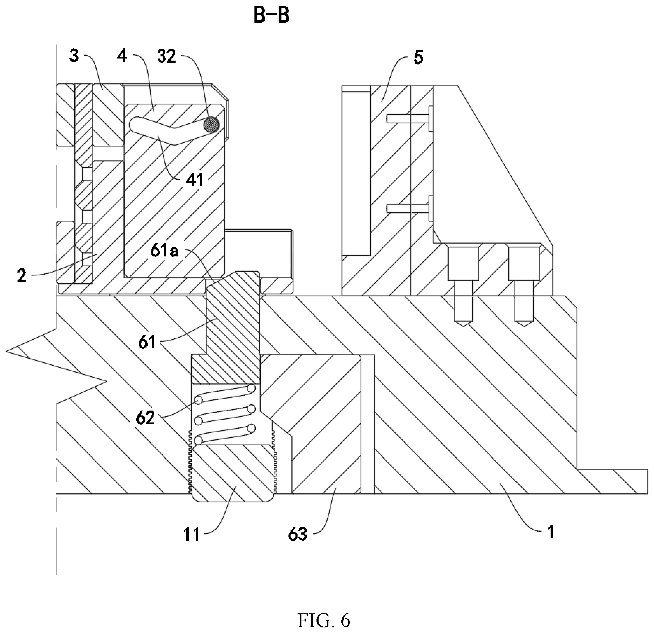

The working process of the above structure is as follows:
In the initial position, as shown in FIG. 6, the power block 4 pushes the lower sliding base 2 to a position farthest from the limiting block 5. In this case, the power block 4 is located on a side of the lock hole that is away from the limiting block 5, and the lock hole is aligned with the lock block 61. Driven by the first spring 62, the lock block 61 extends into the lock hole to fix the lower sliding base 2 relative to the base 1. In this case, a lowest part of the first inclined surface 61a is lower than the bottom of the power block 4, so that the power block 4 can press the lock block 61 to act after moving.

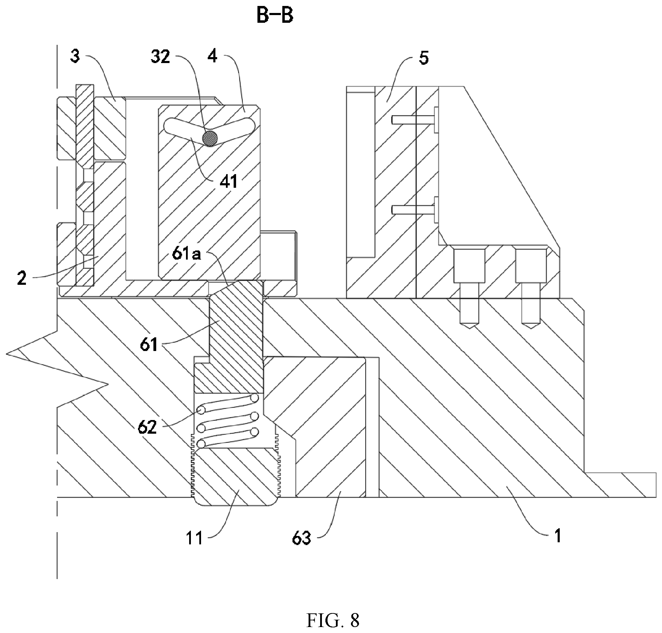

In the clamping position, as shown in FIG. 8, the power block 4 moves to press down the lock block 61 until the lowest part of the first inclined surface 61a is lower than the bottom of the lower sliding base 2 and in this case, the lower sliding base 2 can slide relative to the base 1, thus completing the unlocking of the first locking mechanism.

For convenience in processing and use, Each lock block 61 is usually formed in a cylindrical shape. The cylindrical shape may easily cause rotation of the lock block 61, so that the first inclined surface 61a rotates to other orientations and the function of the first locking mechanism cannot be realized. Therefore, in the device of the present invention, a vertical positioning groove 61b is preferably provided on a side surface of each lock block 61. Positioning blocks 63 are detachably mounted on the base 1, and a side surface of each positioning block 63 extends into the corresponding positioning groove 61b to restrict rotation of the corresponding lock block 61.

Preferably, an adjusting nut 11 is further provided at a lower opening of each through hole in the base 1. The adjusting nuts 11 are threadedly screwed into the openings of the through holes in the base 1. The first springs 62 are disposed in the through holes such that one ends of the first springs 62 abut against the adjusting nuts 11 and the other ends thereof abut against the bottoms of the lock blocks 61. In this way, by changing the screwing depths of the adjusting nuts 11, the force of the first springs 62 pressing against the lock blocks 61 can be adjusted, so that the device can adapt to more processing requirements.

Each second locking mechanism may also be realized by a known structure such as a connecting rod. The present device provides a simpler and more reliable structure, which includes a rotating block 71 and an elastic sheet 72. One end of each rotating block 71 is rotatably mounted on the corresponding lower sliding base 2, and the other end thereof is provided with an abutment block 71a. The width of each abutment block 71a is greater than the thickness of the side wall of the corresponding lower sliding base 2, so that a part of the abutment block 71a protrudes into the corresponding lower sliding base 2, making the rotating block 71 generally L-shaped. One end of each abutment block 71a that is away from the corresponding limiting block 5 has a vertical planar structure for abutting against the side surface of the corresponding power block 4. The other end of each abutment block 71a is provided with a second inclined surface for abutting against the corresponding limiting block 5. A distance between each second inclined surface and the corresponding limiting block 5 gradually increases in a direction toward the interior of the corresponding lower sliding base 2. One end of each elastic sheet 72 is fixed to the corresponding rotating block 71, and the other end thereof is fixed to the corresponding lower sliding base 2. The basic shape (i.e., the shape without deformation) of each elastic sheet 72 keeps the extending direction of the corresponding rotating block 71 parallel to the moving direction of the corresponding lower sliding base 2.

The specific working process of the above structure is as follows:
In the initial position and the clamping position, as shown in FIGS. 5 and 7, the rotating block 71 is maintained in the moving direction of the lower sliding base 2. When moving from the initial position to the clamping position, the power block 4 abuts against the vertical planar structure of the abutment block 71a, thereby driving the rotating block 71 to move together (i.e., driving the lower sliding base 2 to move together), thus completing the locking of the second locking mechanism.

In a separating position, as shown in FIG. 9, after the lower sliding base 2 approaches the limiting block 5, the second inclined surface collides with the limiting block 5, and finally pushes the rotating block 71 to rotate outward by an angle. In this case, the abutment block 71a also moves to a position where the abutment block 71a cannot come into contact with the power block 4, so that the power block 4 can move independently of the lower sliding base 2, thus realizing the unlocking of the second locking mechanism.

Preferably, a push block 51 is provided on each limiting block 5. A side of each push block 51 that faces the corresponding lower sliding base 2 has a curved structure with a center line vertically arranged. The push blocks 51 are mainly configured to cooperate with the second inclined surfaces, so that the rotating blocks 71 can quickly rotate to a specified angle to realize unlocking.

To ensure the safety of the system, a second spring 8 is preferably arranged between each upper sliding base 3 and the corresponding lower sliding base 2. The second springs 8 can support the upper sliding bases 3 to balance the influence of gravity on the upper sliding bases 3, so that the power blocks 4 can better drive the upper sliding bases to move.

Preferably, two sliding rails 12 are provided on the base 1 and are located on two sides of the lower sliding bases 2. Sliding blocks 22 sliding in the sliding rails 12 are arranged on two sides of each lower sliding base 2, so that the two sides can share the force when each lower sliding base 2 moves, ensuring the stability of the lower sliding bases 2 during movement.

If necessary, the device may also be internally provided with an additional fixing unit, as shown in FIG. 2, for fixing a end of the cable that is away from the separating mechanisms, thereby effectively ensuring the fixation of the cable during separation.

The basic principles, main features and advantages of the present invention are shown and described as above. Those skilled in the art should understand that the present invention is not limited to the above embodiments. The above embodiments and descriptions are merely illustrative of the principles of the present invention. Without departing from the spirit and scope of the present invention, various changes and modifications may be made, and all such changes and modifications shall fall within the scope of the present invention. The scope of the present invention is defined by the appended claims and their equivalents.

## Claims

1. A high-quality separating and shaping device for two-core cables, comprising:
a base fixedly arranged independently, two separating mechanisms being symmetrically arranged on the base;
each said separating mechanism comprises:
a lower sliding base sliding horizontally on the base and provided with a lower clamping jaw;
an upper sliding base sliding vertically on the lower sliding base and provided with an upper clamping jaw and a sliding rod;
a power block driven by a power unit to slide horizontally and provided with a vertically V-shaped sliding groove, the sliding rod extending into the sliding groove; and
a limiting block arranged on a movement trajectory of the lower sliding base, a push block being provided on the limiting block, and a side of the push block that faces the lower sliding base having a curved structure;
wherein In an initial position, the lower sliding bases of the two separating mechanisms abut against each other, each sliding rod rests at an end of the corresponding sliding groove that is close to the corresponding limiting block, and the lower sliding bases and the base are fixed to each other by first locking mechanisms;
in a clamping position, the power blocks move until lowest points in the middle of the sliding grooves are aligned with the sliding rods, the first locking mechanisms are unlocked, and the lower sliding bases and the power blocks are fixed to each other by second locking mechanisms;
in a separating position, the power blocks drive the lower sliding bases to move to abut against the limiting blocks, and the second locking mechanisms are unlocked;
in a releasing position, the power blocks move until each sliding rod rests at an end of the corresponding sliding groove that is away from the corresponding limiting block;
wherein each said first locking mechanism comprises a lock block and a first spring;
the lock blocks slide vertically on the base; a first inclined surface is provided on a side of the top of each lock block that is away from the corresponding limiting block; a vertical positioning groove is provided on a side surface of each lock block;
a first spring is arranged between each lock block and the base;
a lock hole is provided at the bottom of each lower sliding base;
positioning blocks are arranged on the base, and a side surface of each positioning block extends into the corresponding positioning groove;
each said second locking mechanism comprises a rotating block and an elastic sheet;
one end of each rotating block is rotatably mounted on the corresponding lower sliding base, and the other end thereof is provided with an abutment block; one end of each abutment block that is away from the corresponding limiting block has a vertical planar structure, and the other end thereof is provided with a second inclined surface;
one end of each elastic sheet is fixed to the corresponding rotating block, and the other end thereof is fixed to the corresponding lower sliding base.

2. The high-quality separating and shaping device for two-core cables according to claim 1, wherein each lower clamping jaw is provided with a first extension plate extending upward, each upper clamping jaw is provided with a second extension plate extending downward, and a side surface of each first extension plate abuts against a side surface of the corresponding second extension plate.

3. The high-quality separating and shaping device for two-core cables according to claim 2, wherein a plurality of said first extension plates and a plurality of said second extension plates are provided, and the first extension plates and the second extension plates are arranged alternately.

4. The high-quality separating and shaping device for two-core cables according to claim 1, wherein the base is provided with adjusting nuts screwed into the base, and one ends of the first springs abut against the adjusting nuts.

5. The high-quality separating and shaping device for two-core cables according to claim 1, wherein a second spring is arranged between each upper sliding base and the corresponding lower sliding base.

6. The high-quality separating and shaping device for two-core cables according to claim 1, wherein two sliding rails are provided on the base and are located at two sides of each lower sliding base; sliding blocks sliding in the sliding rails are provided on two sides of each said lower sliding base.
